# EUROPEAN PATENT APPLICATION

(11) **EP 3 742 523 A1**
(43) Date of publication of application: **25.11.2020**
(21) Application number: 20169519.4
(22) Date of filing: 15.04.2020
(51) Int. Cl.: H01M 2/20, H01R 4/18, H01R 4/62

(54) **CONDUCTIVE MODULE**

(30) Priority: 20.05.2019 JP 2019094677
(71) Applicant: YAZAKI CORPORATION, Minato-ku, Tokyo 108-8333 (JP)
(72) Inventor: YASUDA, Tomoji, Makinohara-shi, Shizuoka 421-0407 (JP); ICHIKAWA, Yoshiaki, Makinohara-shi, Shizuoka 421-0407 (JP); OGA, Tatsuya, Makinohara-shi, Shizuoka 421-0407 (JP)
(74) Representative: Grünecker Patent- und Rechtsanwälte PartG mbB

(57) **Abstract**

A conductive module includes a plurality of conductive terminal connection components (10) for electrical connection with an electrode terminal (BC2); a conductive component (20) that electrically connects a battery cell (BC) and an electrical connection target (Ub); and an electrical connection structure (30) for each terminal connection component that electrically connects the terminal connection component and the conductive component. The conductive component includes a conductor (21) for each terminal connection component formed using a dissimilar metal material which is a different type from the terminal connection component. The electrical connection structure is formed using a similar metal material which is the same type as the conductor.

## Description

### BACKGROUND OF THE INVENTION

### 1. Field of the invention

The present invention relates to a conductive module.

### 2. Description of the Related Art

Conventionally, a vehicle, such as an electric automobile and a hybrid car, is equipped with a battery module that supplies power to a rotary machine serving as a driving source thereof and a battery monitoring unit that monitors battery states of a plurality of battery cells constituting the battery module. Further, the vehicle is equipped with a conductive module that performs electrical connection between at least the battery cells and the battery monitoring unit. The conductive module includes a plurality of conductive terminal connection components electrically connecting electrode terminals of adjacent battery cells, and the respective battery cells are connected in series or in parallel by electrically connecting the electrode terminals with each of the terminal connection component. Further, the conductive module includes a terminal connection component for electrical connection with an electrode terminal serving as a total positive electrode, and a terminal connection component for electrical connection with an electrode terminal serving as a total negative electrode. Furthermore, the conductive module includes a conductor to be electrically connected to the terminal connection component for each of the terminal connection components. As each of the conductors is electrically connected to the battery monitoring unit, a signal relating to the battery state of each of the battery cells is sent to an arithmetic processing unit of the battery monitoring unit. For example, Japanese Patent Application Laid-open No. 2014-60093 listed below discloses a conductive module of this type in which an electric wire is used as a conductor. In addition, Japanese Patent Application Laid-open No. 2018-26311 listed below discloses a conductive module of this type using a flexible conductive component such as a flat cable (so-called FC) having a plurality of conductors or a flexible printed circuit board (so-called FPC).

Meanwhile, there is a case where connection between the similar metal materials and connection between dissimilar metal materials are mixed in the conductive module. In this case, two types of connection processing equipment are generally required, and further, the connection between dissimilar metal materials is performed using expensive equipment, so that there is a concern that cost will rise.

### SUMMARY OF THE INVENTION

Therefore, an object of the present invention is to provide a conductive module that can reduce cost.

To achieve the above object, a conductive module according to one aspect of the present invention includes a plurality of conductive terminal connection components that electrically connect with electrode terminals of a battery module in which a plurality of battery cells having the electrode terminals being positive and negative, respectively are arranged; a conductive component that is interposed between an electrical connection target of the battery cell and the terminal connection component, and electrically connects the battery cell and the electrical connection target; and an electrical connection structure for each of the terminal connection components that electrically connects the terminal connection component and the conductive component, wherein the conductive component is formed using a dissimilar metal material which is different type from the terminal connection component and includes a conductor for each of the terminal connection components for electrical connection between the terminal connection component and the electrical connection target, and an insulator that wraps a plurality of the conductors inside and exposes electrical connection portions of the conductors to an outside, and the electrical connection structure is formed using a similar metal material which is a similar type as the conductor, and includes an electrical connection component, which is interposed between a protruding portion protruding from a main body of the terminal connection component and the electrical connection portion of the conductor serving as a connection target of the terminal connection component, a pressing connection structure that keeps a physical and electrical connection state between the protruding portion and a first connection portion of the electrical connection component while applying a mechanical pressure therebetween, and a soldering connection structure that solders a second connection portion of the electrical connection component and the electrical connection portion to keep a physical and electrical connection state therebetween.

According to another aspect of the present invention, in the conductive module, it is preferable that the pressing connection structure is a crimp structure that crimps the first connection portion to the protruding portion.

According to still another aspect of the present invention, in the conductive module, it is preferable that the conductive component is formed such that each of the conductor and the insulator has flexibility and is flat.

According to still another aspect of the present invention, in the conductive module, it is preferable that the conductive component is a flexible printed circuit board.

To achieve the above object, a conductive module according to still another aspect of the present invention includes a plurality of conductive terminal connection components that electrically connect with electrode terminals of a battery module in which a plurality of battery cells having the electrode terminals being positive and negative, respectively are arranged; a conductive component that is interposed between an electrical connection target of the battery cell and the terminal connection component, and electrically connects the battery cell and the electrical connection target; and an electrical connection structure for each of the terminal connection components that electrically connects the terminal connection component and the conductive component, wherein the conductive component is formed using a dissimilar metal material which is a different type from the terminal connection component and includes a conductor for each of the terminal connection components for electrical connection between the terminal connection component and the electrical connection target, and an insulator that wraps a plurality of the conductors inside and exposes electrical connection portions of the conductors to an outside, the terminal connection component has a main body electrically connected to the electrode terminal, a protruding portion protruding from the main body, and a plating portion provided on an outer wall face of the protruding portion, and the electrical connection structure has the plating portion and a soldering connection structure that solders the protruding portion provided with the plating portion, and the electrical connection portion of the conductor serving as a connection target of the protruding portion to keep a physical and electrical connection state therebetween.

According to still another aspect of the present invention, in the conductive module, it is preferable that the plating portion is capable of being soldered to a metal material forming the conductor.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view illustrating a conductive module according to an embodiment together with a battery module;
FIG. 2 is an exploded perspective view illustrating the conductive module of the embodiment separated from the battery module;
FIG. 3 is an enlarged view of a section A in FIG. 1;
FIG. 4 is an exploded perspective view illustrating the conductive module according to the embodiment;
FIG. 5 is a partially enlarged view illustrating a state before connection of a portion relating to an electrical connection structure; and
FIG. 6 is a partially enlarged view illustrating a conductive module according to a modified example.

### DETAILED DESCRIPTION OF THE PREFERRED EMBODIMENTS

Hereinafter, embodiments cf a conductive module according to the present invention will be described in detail with reference to the drawings. Incidentally, the invention is not limited by the embodiments.

### Embodiment

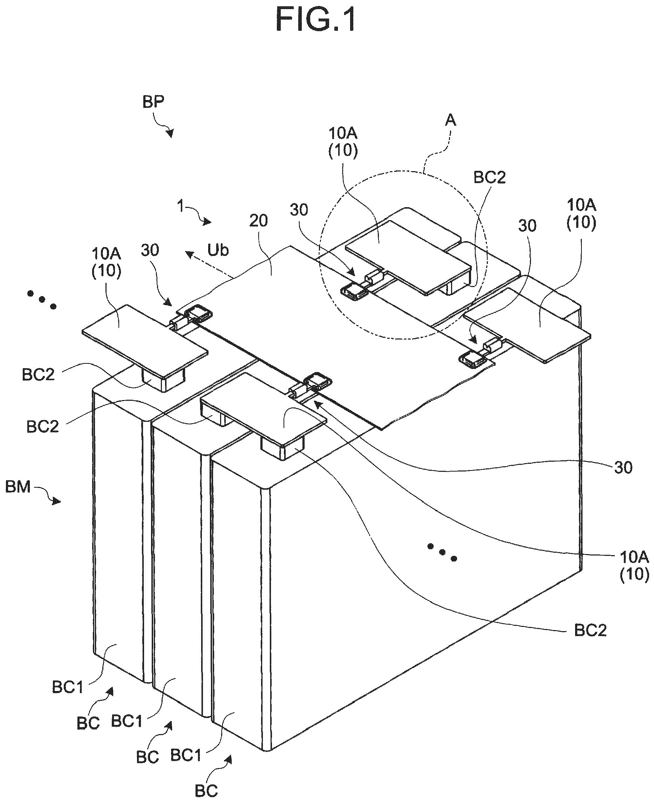

One of embodiments of the conductive module according to the present invention will be described with reference to FIGS. 1 to 5.

In FIGS. 1 to 5, reference numeral 1 represents the conductive module according to this embodiment. The conductive module 1 is assembled with a battery module BM to form a battery pack BP together with the battery module BM (FIGS. 1 to 3). The battery pack BP is mounted in a vehicle (an electric automobile, a hybrid car, or the like) having a rotary machine as a driving source, and is used for supply of electric power to the rotary machine or the like. Incidentally, the conductive module 1 and the battery module BM in each drawing are illustrated by extracting each part thereof.

The battery module BM includes a plurality of battery cells BC (FIGS. 1 to 3). The battery cell BC includes a cell body BC1 and two electrode terminals BC2 (FIGS. 1 to 3). Each of the electrode terminals BC2 is provided at any place of the cell body BC1 in the state of being exposed to the outside, one of which serves as a positive electrode and the other of which serves as a negative electrode. Each of the electrode terminals BC2 is, for example, a plate-shaped or rectangular parallelepiped terminal provided on an outer wall face of the cell body BC1, or a columnar pole protruding from the outer wall face of the cell body BC1. When the cell body BC1 has a plurality of outer wall faces, the respective electrode terminals BC2 may be disposed on one of the outer wall faces or may be disposed on different outer wall faces.

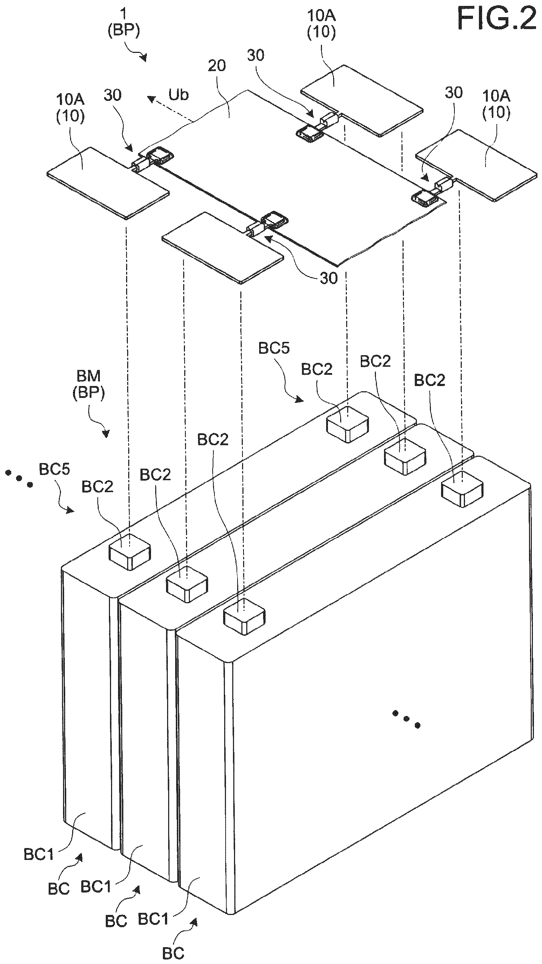

In the battery module BM, the plurality of battery cells BC having the respective positive and negative electrode terminals BC2 are arranged in one direction. In this battery module BM, the respective battery cells BC are arranged in a state where one electrode terminal BC2 and the other electrode terminal BC2 of each of the battery cells BC are aligned in a row. Thus, an electrode terminal group BC5 formed of the plurality of electrode terminals BC2 aligned in a row is provided at two points in the battery module BM (FIG. 2). Hereinafter, when it is described as "arrangement direction" without any particular reference, it indicates an arrangement direction of the plurality of battery cells BC and an arrangement direction of the plurality of electrode terminals BC2 for each of the electrode terminal groups BC5.

For example, the cell body BC1 forms a rectangular parallelepiped in the battery cell BC of the present embodiment (FIG. 2). Thus, the battery module BM according to the present embodiment virtually forms a rectangular parallelepiped with the respective battery cells BC, and has six wall faces of an aggregate that is formed of the plurality of battery cells BC. In addition, the battery cell BC of the present embodiment has two electrode terminals BC2 on one outer wall face of the cell body BC1 (FIG. 2). Accordingly, the battery module BM of the present embodiment is provided with the two electrode terminal groups BC5 on one of the six wall faces forming the rectangular parallelepiped. For example, the battery module BM is mounted on a vehicle such that each of the electrode terminals BC2 faces the upper side of the vehicle.

The conductive module 1 is assembled to the battery module BM configured as described above, and is electrically connected to each of the battery cells BC.

The conductive module 1 includes a plurality of conductive terminal connection components 10 (FIGS. 1 to 5) that are electrically connected to the electrode terminals BC2 of the battery module BM. Furthermore, this conductive module 1 includes a conductive component 20 that is interposed between an electrical connection target Ub of the battery cell BC and the terminal connection component 10, and electrically connects the battery cell BC and the electrical connection target Ub (FIGS. 1 and 2). As the electrical connection target Ub, for example, a battery monitoring unit configured to monitor a battery state (voltage, current, temperature, or the like) of each of the battery cells BC is considered.

The conductive module 1 may be prepared one by one for each of the electrode terminal groups BC5. One of the conductive modules 1 is provided with a plurality of the terminal connection components 10 and the conductive component 20 for one electrode terminal group BC5. Further, the other conductive module 1 is provided with a plurality of the terminal connection components 10 and the conductive component 20 for the other electrode terminal group BC5. In this case, the conductive component 20 extends in the arrangement direction, and is disposed to be aligned next to the respective terminal connection components 10 arranged in the arrangement direction.

In addition, the single conductive module 1 may be prepared for the both electrode terminal groups BC5. The conductive module 1 may include a plurality of the terminal connection components 10 for one electrode terminal group BC5, a plurality of the terminal connection components 10 for the other electrode terminal group BC5, and the conductive component 20 interposed between each of the terminal connection components 10 and the electrical connection target Ub. In the present embodiment, the conductive module 1 in this case is taken as an example, and the conductive component 20 extending in the arrangement direction and extending between the respective electrode terminal groups BC5 is disposed between the respective electrode terminal groups BC5.

The terminal connection component 10 is formed to be electrically connected to one or two electrode terminals BC2 of the battery module BM. As the terminal connection component 10 illustrated here, a terminal connection component 10A, which electrically connects adjacent ones of the electrode terminals BC2 in the electrode terminal group BC5 in the arrangement direction, is provided (FIGS. 1 to 5). Although not illustrated, in the conductive module 1, a positive electrode terminal connection component for electrical connection with the electrode terminal BC2 which serves as a so-called total positive electrode of the battery module BM, and a negative electrode terminal connection component for electrical connection with the electrode terminal BC2 which serves as a so-called total negative electrode of the battery module BM are provided as the terminal connection component 10.

In the battery module BM, adjacent ones of the respective electrode terminals BC2 in the arrangement direction are electrically connected by the terminal connection component 10A in each of the electrode terminal groups BC5 so that the respective battery cells BC are connected in series or in parallel. In addition, there are two electrode terminals BC2, which are not connected to each other via the terminal connection component 10A, in the battery module BM, and one thereof serves as a total positive electrode and the other serves as a total negative electrode. In this battery module BM, for example, the plurality of terminal connection components 10A arranged along the arrangement direction and the positive terminal connection component are electrically connected for each of the electrode terminals BC2 of one electrode terminal group BC5, and the plurality of terminal connection components 10A arranged along the arrangement direction and the negative terminal connection component are electrically connected for each of the electrode terminals BC2 of the other electrode terminal group BC5.

The terminal connection component 10 is formed using a metal material. The terminal connection component 10 is preferably formed using the similar metal material which is the same type as the electrode terminal BC2, but may be formed using a dissimilar metal material which is a different type from the electrode terminal BC2. The similar metal material is a metal material having the same ionization tendency, and refers to, for example, the same metal material or a metal material having a relationship between a first metal and an alloy using the first metal as a main material. Here, for example, copper and a copper alloy correspond to the similar metal materials, and aluminum and an aluminum alloy correspond to the same type of metal materials. Accordingly, if the similar metal material which is the same type as the electrode terminal BC2 is used, the terminal connection component 10 is formed using copper or a copper alloy, for example, when the electrode terminal BC2 is formed using copper or a copper alloy, or formed using aluminum or an aluminum alloy when the electrode terminal BC2 is formed using aluminum or an aluminum alloy. On the other hand, the dissimilar metal material is a metal material having a difference in ionization tendency enough to cause dissimilar metal corrosion, and refers to, for example, a metal material having a relationship between a first metal and an alloy using the first metal as a main material, and a second metal and an alloy using the second metal as a main material. Here, for example, copper and a copper alloy and aluminum and an aluminum alloy are different types of metal materials. Accordingly, if the dissimilar metal material which is the different type from the electrode terminal BC2 is used, the terminal connection component 10 is formed using aluminum or an aluminum alloy, for example, when the electrode terminal BC2 is formed using copper or a copper alloy, or formed using copper or a copper alloy when the electrode terminal BC2 is formed using aluminum or an aluminum alloy.

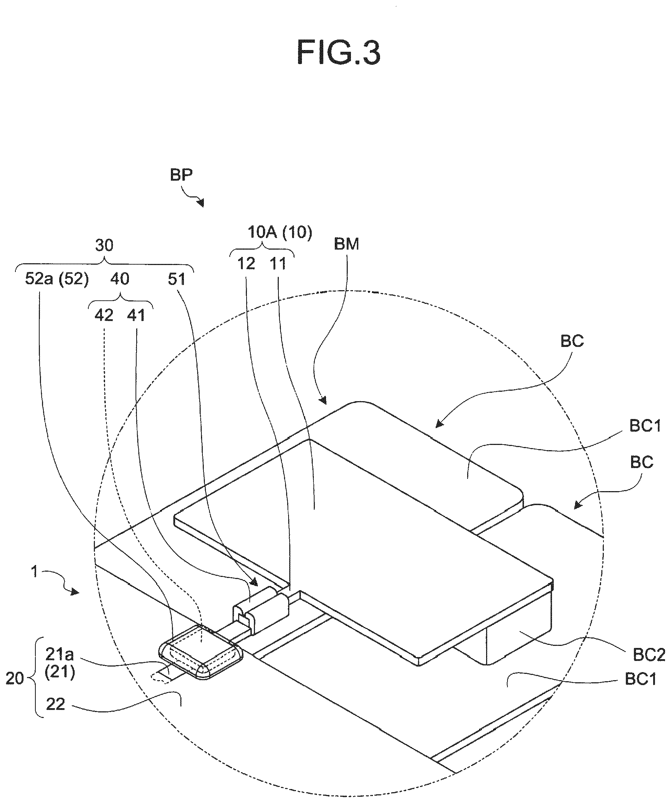

The terminal connection component 10 may be a component that makes direct electrical connection with the electrode terminal BC2, or may be a component that makes indirect electrical connection with the electrode terminal BC2. For example, in the case of the plate-shaped or rectangular parallelepiped electrode terminal BC2, the terminal connection component 10 is welded (by laser welding or the like) to the electrode terminal BC2 to make the direct electrical connection therebetween. In this case, the terminal connection component 10A is welded to the respective electrode terminals BC2 adjacent in the arrangement direction. In addition, when the electrode terminal BC2 is a pole, the pole itself has a male screw portion, and a through hole for insertion of the electrode terminal BC2 is formed in the terminal connection component 10. As a female screw member is screwed to the male screw portion of the electrode terminal BC2 inserted into the through hole, the terminal connection component 10 is screwed and fixed to the electrode terminal BC2. In this case, for the terminal connection component 10A, the respective electrode terminals BC2 adjacent in the arrangement direction are inserted into the corresponding through holes, respectively, and the female screw member is screwed for each male screw portion of each of the electrode terminals BC2, whereby the female screw member is screwed and fixed to each of the electrode terminals BC2. The terminal connection component 10 of this example is a so-called bus bar formed using a metal plate as a base material, and has a rectangular flat main body 11 (FIGS. 3 to 5). In the terminal connection component 10, the main body 11 is physically and electrically connected to the electrode terminal BC2. Here, the plate-shaped or rectangular parallelepiped electrode terminal BC2 and the plate-shaped main body 11 are brought into surface contact with each other and then welded.

Further, the terminal connection component 10 has a protruding portion 12 protruding from the main body 11 (FIGS. 3 to 5). The protruding portion 12 is provided as an electrical connection portion for indirect electrical connection with the conductor 21 of the conductive component 20 as will be described later. In the terminal connection component 10 of this example, the protruding portion 12 protrudes from one side of the main body 11 on the same plane as the main body 11. The terminal connection component 10 physically and electrically connects the protruding portion 12 in the state of facing the conductive component 20 side to the electrode terminal BC2.

The conductive component 20 has a conductor 21 for each of the terminal connection components 10 that electrically connects the terminal connection component 10 and the electrical connection target Ub (FIGS. 3 to 5). The conductor 21 is formed using a dissimilar metal material which is a different type from the terminal connection component 10. There is the above-described difference between the types. The conductor 21 is an electrical connection target of the terminal connection component 10, and has an electrical connection portion 21a for indirect electrical connection with the protruding portion 12 of the terminal connection component 10 (FIGS. 3 to 5). Although not illustrated, the conductor 21 also has an electrical connection portion with respect to the electrical connection target Ub. The electrical connection portion 21a is disposed to face the protruding portion 12 of the terminal connection component 10, which is the connection target, at an interval. The electrical connection portion 21a in this example is disposed to face the protruding portion 12 at an interval on the protruding direction side of the protruding portion 12 of the terminal connection component 10 in the state of being connected to the electrode terminal BC2 in a direction orthogonal to the arrangement direction.

Further, the conductive component 20 has an insulator 22 that wraps the plurality of conductors 21 inside and exposes the electrical connection portions 21a of the respective conductors 21 to the outside (FIGS. 3 to 5). In the conductive component 20 illustrated here, the respective conductors 21 and the insulator 22 are integrally formed as one component. For example, the conductive component 20 has flexibility (that is, elasticity) to each of the conductors 21 and the insulator 22 and is formed to be flat (hereinafter, referred to as a "flexible flat conductive component"). As the flexible flat conductive component, a flexible printed circuit board (so-called FPC), a printed circuit body such as a membrane wiring board, a flat cable (so-called FC), a flexible flat cable (so-called FFC), or the like can be used. Here, the flexible printed circuit board is taken as an example of the conductive component 20. Note that a printed circuit board (so-called PCB) may be used as the conductive component 20, instead of such a flexible flat conductive component, in the conductive module 1.

The conductive module 1 includes an electrical connection structure 30 for each of the terminal connection components 10 that electrically connects the terminal connection component 10 and the conductive component 20 (FIGS. 1 to 4). That is, the electrical connection structure 30 is provided between the terminal connection component 10 and the conductor 21 of the conductive component 20, which are to be electrically connected to each other, and is provided for each combination of the terminal connection component 10 and the conductor 21. The electrical connection structure 30 electrically connects the protruding portion 12 of the terminal connection component 10 and the electrical connection portion 21a of the conductor 21, which are to be electrically connected to each other, and electrically connects the battery cell BC electrically connected to the terminal connection component 10 and the electrical connection target Ub electrically connected to the conductor 21.

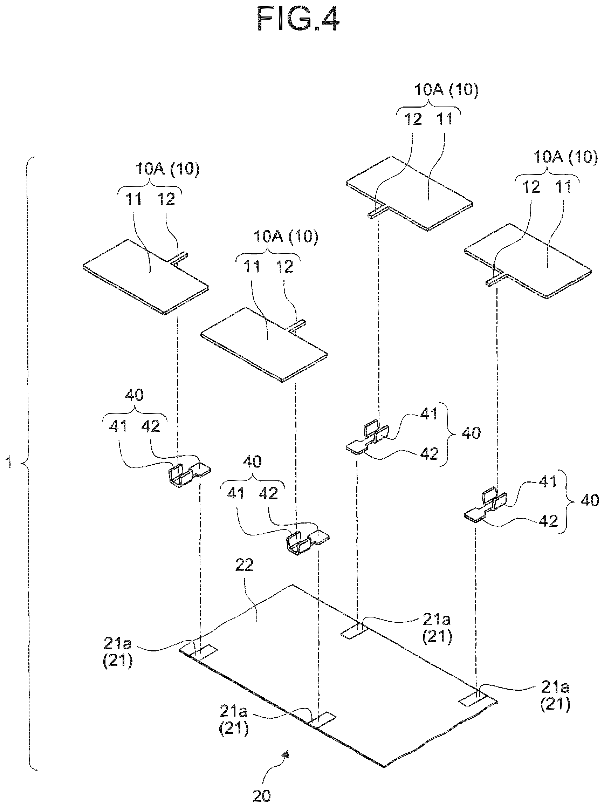

Specifically, the electrical connection structure 30 includes an electrical connection component 40 which is interposed between the protruding portion 12 of the terminal connection component 10, which is the connection target, and the electrical connection portion 21a of the conductor 21 in the conductive component 20 and electrically connects the protruding portion 12 and the electrical connection portion 21a (FIGS. 3 to 5). The electrical connection component 40 is formed using the similar metal material which is the same type as the conductor 21. There is the above-described difference between the types. In the electrical connection structure 30, the electrical connection component 40 is physically and electrically connected to each of the protruding portion 12 and the electrical connection portion 21a, thereby electrically connecting the protruding portion 12 and the electrical connection portion 21a. For this reason, the electrical connection component 40 includes: a first connection portion 41 for physical and electrical connection with the protruding portion 12; and a second connection portion 42 for physical and electrical connection with the electrical connection portion 21a (FIGS. 3 to 5). Further, this electrical connection structure 30 includes: a pressing connection structure 51 that keeps a physical and electrical connection state between the protruding portion 12 and the first connection portion 41 while applying a mechanical pressure therebetween; and a soldering connection structure 52 that solders the second connection portion 42 and the electrical connection portion 21a to keep a physical and electrical connection state therebetween (FIGS. 3 and 4).

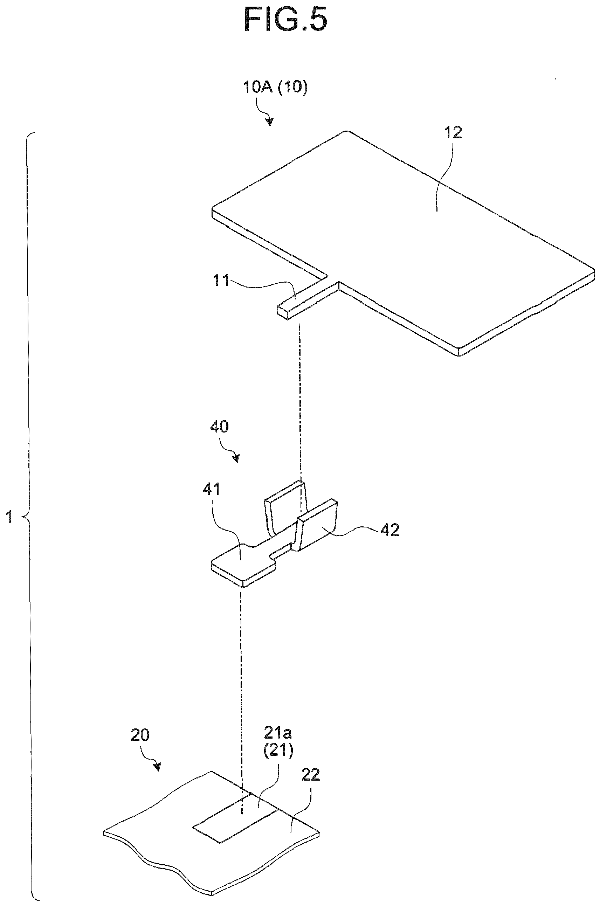

The pressing connection structure 51 illustrated here is a crimp structure that caulks and crimps the first connection portion 41 to the protruding portion 12. Therefore, the protruding portion 12 is caused to axially protrude so as to be caulked and crimped to the first connection portion 41. The axial protruding portion 12 illustrated in this example protrudes toward the electrical connection portion 21a side such that an axial direction thereof faces the electrical connection portion 21a of the conductor 21, which is an electrical connection target, along the plane of the main body 11. Further, the first connection portion 41 is formed in a terminal connection portion shape which wraps and crimps the protruding portion 12 from the outer peripheral surface side on substantially the same axis. The first connection portion 41 may be, for example, a so-called open barrel type terminal connection portion or a so-called closed barrel type terminal connection portion. The first connection portion 41 illustrated in this example is formed as a U-shaped open barrel type terminal connection portion having two barrel pieces, and caulks and crimps the two barrel pieces against the protruding portion 12 placed on the bottom of the U-shape (FIGS. 4 and 5). As the caulked and crimped state between the protruding portion 12 and the first connection portion 41 is kept in the pressing connection structure 51, the physical and electrical connection state between the protruding portion 12 and the first connection portion 41 is kept while applying the mechanical pressure accompanying the caulking and crimping. Note that this pressing connection structure 51 may be a crimping structure that caulks and crimps the protruding portion 12 to the first connection portion 41 by interchanging the shape of the protruding portion 12 and the shape of the first connection portion 41.

The soldering connection structure 52 physically and electrically connects the second connection portion 42 and the electrical connection portion 21a by soldering. The second connection portion 42 and the electrical connection portion 21a are physically and electrically connected to each other by a solder bonding portion 52a formed by solidification of the molten solder (FIG. 3). The solder bonding portion 52a may have any form as long as it physically and electrically connects the second connection portion 42 and the electrical connection portion 21a, and may be, for example, a solidified solder paste interposed therebetween.

In this manner, in the conductive module 1 of the present embodiment, when the terminal connection component 10 and the conductor 21 of the conductive component 20 are formed using dissimilar metal materials, respectively, the electrical connection component 40 formed using the similar metal material which is the same type as the conductor 21 is prepared. Further, in this conductive module 1, the protruding portion 12 of the terminal connection component 10, which is the electrical connection target, and the first connection portion 41 of the electrical connection component 40 are kept in the state of being connected by the mechanical pressure by the pressing connection structure 51, and the electrical connection portion 21a of the conductor 21, which is the electrical connection target, and the second connection portion 42 of the electrical connection component 40 are kept in the state of being connected by soldering.

In a conventional conductive module, however, the terminal connection component and an electrical connection component made of dissimilar metal materials are bonded by ultrasonic bonding, and thus, a great deal of equipment investment is required for the ultrasonic bonding machine. In the conductive module 1 according to the present embodiment, however, the pressing connection structure 51 that can reduce the cost required for equipment investment as compared to the ultrasonic bonding machine is employed at a connection point between the terminal connection component 10 and the electrical connection component 40 made of dissimilar metal materials. Thus, the cost of the conductive module 1 of the present embodiment can be reduced as compared with the conventional module.

In addition, the conductive module 1 of the present embodiment uses aluminum for the terminal connection component 10, for example, and thus, can achieve cost reduction and weight reduction as compared with the case where copper is used for the terminal connection component 10. Regarding the cost reduction, there is a reduction effect that depends on the material of the terminal connection component 10 itself. In addition, in the conductive module 1, even if the terminal connection component 10 formed using aluminum and the electrode terminal BC2 formed using copper are laser-welded, the output at this time can be lowered due to the low melting point of aluminum, and thus, it is also possible to obtain a cost reduction effect accompanying such a decrease in output.

For example, when the dissimilar metal material (for example, copper) which is a different type from the terminal connection component 10 formed using aluminum is used for the conductor 21 of the conductive component 20 in the conductive module 1 of the present embodiment, the electrical connection component 40 formed using the similar metal material (for example, copper) which is the same type as the conductor 21 is prepared. In the conductive module 1, the protruding portion 12 of the terminal connection component 10 and the first connection portion 41 of the electrical connection component 40 are formed using the mutually dissimilar metal materials, but the connection state is kept by the mechanical pressure by the pressing connection structure 51. In addition, the electrical connection portion 21a of the conductor 21 and the second connection portion 42 of the electrical connection component 40 are formed using the similar metal material, and thus, can be soldered to each other. In addition, when the electrode terminal BC2 is formed using the similar metal material which is the same type as the terminal connection component 10 (for example, aluminum), the terminal connection component 10 and the electrode terminal BC2 can be welded to each other to keep the mutually bonded state. When the electrode terminal BC2 is formed using a dissimilar metal material (for example, copper) which is a different type from the terminal connection component 10, the terminal connection component 10 and the electrode terminal BC2 can be kept in the mutually bonded state by brazing with a brazing material interposed therebetween.

As described above, the conductive module 1 of the present embodiment can electrically connect the terminal connection component 10 and the conductor 21 of the conductive component 20, which are to be electrically connected to each other, at low cost.

Meanwhile, the crimp structure that caulks and crimps the first connection portion 41 to the protruding portion 12 is used as the pressing connection structure 51 in the example that has been described so far. However, as the pressing connection structure 51, a screw fastening structure that connects the protruding portion 12 and the first connection portion 41 by an axial force of screwed male screw portion and female screw portion may be used although not illustrated. In this case, each of the protruding portion 12 and the first connection portion 41 is formed in a flat plate shape having a through hole, and the male screw portion is inserted into each through hole, and then, screwed and fixed by the female screw portion. In addition, a connection terminal structure having a male terminal portion and a female terminal portion that are inserted and fitted to each other may be used as the pressing connection structure 51 although not illustrated. In this case, one of the protruding portion 12 and the first connection portion 41 is formed as the male terminal portion, and the other is formed as the female terminal portion.

### Modified Example

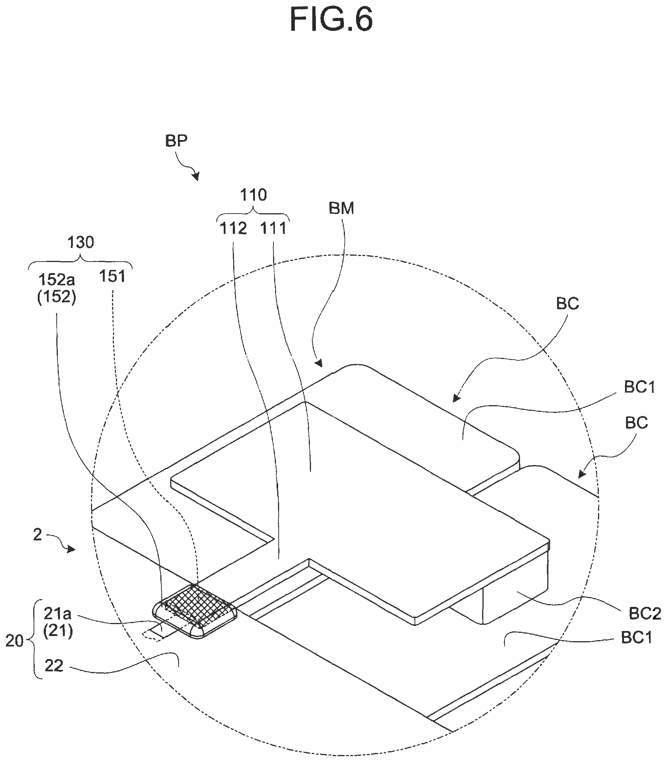

The conductive module 2 of the present modified example is obtained by replacing the electrical connection structure 30 with an electrical connection structure 130 to be described later, in the conductive module 1 of the above-described embodiment (FIG. 6).

The electrical connection structure 130 of the present modified example may be obtained by using the terminal connection component 10 of the embodiment as it is and changing the conductive component 20 for the present structure, or may be obtained by using the conductive component 20 of the embodiment as it is and changing the terminal connection component 10 for the present structure. In this example, the latter is taken as an example.

A terminal connection component 110 of the present modified example has a main body 111 and a protruding portion 112 similarly to the terminal connection component 10 of the embodiment (FIG. 6). In this terminal connection component 110, however, the one-sided protruding portion 112 protrudes from the main body 111 although the main body 111 is formed in the same shape as the main body 11 of the embodiment. The protruding portion 112 illustrated in this example protrudes on the same plane as the main body 111. In addition, in the terminal connection component 110 of the present modified example, a placing portion 151 is provided on an outer wall face of the protruding portion 112 (FIG. 6). The plating portion 151 may be provided in a portion of the outer wall face of the protruding portion 112 that relates to a soldering connection structure 152 to be described later (a place where a solder bonding portion 152a is formed or the place where the solder bonding portion 152a is formed and its surroundings), or may be provided on the entire outer wall face of the protruding portion 112. Note that the cross hatching in the drawing is provided for convenience to indicate the plating portion 151.

In the conductive module 2 of the present modified example, the terminal connection component 110 is formed using aluminum or an aluminum alloy, and the conductor 21 of the conductive component 20 is formed using copper or a copper alloy. The electrical connection structure 130 of the present modified example includes the plating portion 151 and the soldering connection structure 152 that solders the protruding portion 112 provided with the plating portion 151 and the electrical connection portion 21a of the conductor 21 which is a connection target of the protruding portion 112 to keep a physical and electrical connection state therebetween (FIG. 6). Accordingly, as the plating portion 151, a material that can be soldered to a metal material forming the conductor 21 (for example, the material exhibiting the same ionization tendency as the metal material forming the conductor 21) is used. For example, tin plating is used for the plating portion 151 illustrated in this example.

The soldering connection structure 152 physically and electrically connects the protruding portion 112 and the electrical connection portion 21a by soldering between the protruding portion 112 and the electrical connection portion 21a via the plating portion 151. The solder bonding portion 152a is formed between the plating portion 151 and the electrical connection portion 21a as the molten solder solidifies (FIG. 6). Accordingly, the protruding portion 112 and the electrical connection portion 21a are physically and electrically connected to each other via the plating portion 151 and the solder bonding portion 152a.

In the conductive module 2 of the present modified example, the terminal connection component 110 is formed using aluminum or an aluminum alloy and the conductor 21 of the conductive component 20 is formed using copper or a copper alloy, but the protruding portion 112 and the electrical connection portion 21a of the conductor 21 can be soldered since the plating portion 151 as described above is provided on the protruding portion 112 of the terminal connection component 110.

As described above, the conductive module 2 of the present modified example is different from the conductive module 1 of the embodiment, and can electrically connect the terminal connection component 10 and the conductor 21 of the conductive component 20 at low cost without using the electrical connection component 40.

In a conductive module according to the embodiment, when a terminal connection component and a conductor of a conductive component are formed using different types of metal materials, an electrical connection component made of the same type of metal material as the conductor is prepared. Further, in this conductive module, a protruding portion of the terminal connection component and the first connection portion of the electrical connection component are kept in the state of being connected by mechanical pressure by a pressing connection mechanism, and an electrical connection portion of the conductor and a second connection portion of the electrical connection component are kept in the state of being connected by soldering. In a conventional conductive module, however, a terminal connection component and an electrical connection component made of different types of metal materials are bonded by ultrasonic bonding, and thus, a great deal of equipment investment is required for the ultrasonic bonding machine. In the conductive module according to the embodiment, however, the pressing connection mechanism that can reduce the cost required for equipment investment as compared to the ultrasonic bonding machine is employed at a connection point between the terminal connection component and the electrical connection component made of different types of metal materials. Thus, the conductive module according to the embodiment can perform the electrical connection between the terminal connection component and the conductor at low cost, and thus, can reduce the cost as compared to the conventional conductive module. In addition, when the terminal connection component and the conductor of the conductive component are made of different types of metal materials in the conductive module according to the embodiment, a plating portion is provided on an outer wall face of the protruding portion of the terminal connection component, and the protruding portion of the terminal connection component and the electrical connection portion of the conductor are kept in the state of being connected by soldering via the plating portion. Accordingly, the conductive module according to the embodiment can perform the electrical connection between the terminal connection component and the conductor at low cost with such a configuration, and thus, can reduce the cost as compared to the conventional conductive module.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A conductive module (1) comprising:
a plurality of conductive terminal connection components (10) that electrically connect with electrode terminals (BC2) of a battery module (BM) in which a plurality of battery cells (BC) having the electrode terminals (BC2) being positive and negative, respectively are arranged;
a conductive component (20) that is interposed between an electrical connection target (Ub) of the battery cell (BC) and the terminal connection component (10), and electrically connects the battery cell (BC) and the electrical connection target (Ub); and
an electrical connection structure (30) for each of the terminal connection components (10) that electrically connects the terminal connection component (10) and the conductive component (20), wherein
the conductive component (20) is formed using a dissimilar metal material which is different type from the terminal connection component (10) and includes a conductor (21) for each of the terminal connection components (10) for electrical connection between the terminal connection component (10) and the electrical connection target (Ub), and an insulator (22) that wraps a plurality of the conductors (21) inside and exposes electrical connection portions (21a) of the conductors (21) to an outside, and
the electrical connection structure (30) is formed using a similar metal material which is a similar type as the conductor (21), and includes an electrical connection component (40), which is interposed between a protruding portion (12) protruding from a main body (11) of the terminal connection component (10) and the electrical connection portion (21a) of the conductor (21) serving as a connection target of the terminal connection component (10), a pressing connection structure (51) that keeps a physical and electrical connection state between the protruding portion (12) and a first connection portion (41) of the electrical connection component (40) while applying a mechanical pressure therebetween, and a soldering connection structure (52) that solders a second connection portion (42) of the electrical connection component (40) and the electrical connection portion (21a) to keep a physical and electrical connection state therebetween.

2. The conductive module (1) according to claim 1, wherein
the pressing connection structure (51) is a crimp structure that crimps the first connection portion (41) to the protruding portion (12).

3. The conductive module (1) according to claim 1 or 2, wherein
the conductive component (20) is formed such that each of the conductor (21) and the insulator (22) has flexibility and is flat.

4. The conductive module (1) according to claim 1, 2, or 3 wherein
the conductive component (20) is a flexible printed circuit board.

5. A conductive module (2) comprising:
a plurality of conductive terminal connection components (110) that electrically connect with electrode terminals (BC2) of a battery module (BM) in which a plurality of battery cells (BC) having the electrode terminals (BC2) being positive and negative, respectively are arranged;
a conductive component (20) that is interposed between an electrical connection target (Ub) of the battery cell (BC) and the terminal connection component (110), and electrically connects the battery cell (BC) and the electrical connection target (Ub); and
an electrical connection structure (130) for each of the terminal connection components (110) that electrically connects the terminal connection component (110) and the conductive component (20), wherein
the conductive component (20) is formed using a dissimilar metal material which is a different type from the terminal connection component (110) and includes a conductor (21) for each of the terminal connection components (110) for electrical connection between the terminal connection component (110) and the electrical connection target (Ub), and an insulator (22) that wraps a plurality of the conductors (21) inside and exposes electrical connection portions (21a) of the conductors (21) to an outside,
the terminal connection component (110) has a main body (111) electrically connected to the electrode terminal (BC2), a protruding portion (112) protruding from the main body (111), and a plating portion (151) provided on an outer wall face of the protruding portion (112), and
the electrical connection structure (130) has the plating portion (151) and a soldering connection structure (152) that solders the protruding portion (112) provided with the plating portion (151), and the electrical connection portion (21a) of the conductor (21) serving as a connection target of the protruding portion (12) to keep a physical and electrical connection state therebetween.

6. The conductive module (2) according to claim 5, wherein
the plating portion (151) is capable of being soldered to a metal material forming the conductor (21).
